# EUROPÄISCHE PATENTSCHRIFT

(11) **EP 0 815 634 B1**
(45) Veröffentlichungstag und Bekanntmachung des Hinweises auf die Patenterteilung: **13.09.2000**
(21) Anmeldenummer: 96908092.8
(22) Anmeldetag: 20.03.1996
(51) Int. Cl.: H02K 7/09, F16C 39/06

(54) **MAGNETISCH GELAGERTES, LAGESTABILISIERBARES SCHWUNGRAD**
MAGNETICALLY MOUNTED, POSITION-STABILISED FLYWHEEL
VOLANT D'INERTIE A PALIERS MAGNETIQUES, DONT LA POSITION PEUT ETRE STABILISEE

(30) Priorität: 21.03.1995 DE 19509628
(43) Veröffentlichungstag der Anmeldung: 07.01.1998
(73) Patentinhaber: TELDIX GmbH, 69123 Heidelberg (DE)
(72) Erfinder: BICHLER, Udo, D-69126 Heidelberg (DE); ECKARDT, Thomas, D-69123 Heidelberg (DE)
(74) Vertreter: Müller, Frithjof E., Dipl.-Ing.
(86) Internationale Anmeldenummer: EP9601211
(87) Internationale Veröffentlichungsnummer: WO9629775

(56) Entgegenhaltungen:
- EP-A- 0 049 300
- DE-A- 2 842 205
- DE-A- 3 150 122
- US-A- 4 444 444
- US-A- 4 563 046
- US-A- 5 302 874

## Beschreibung

Die Erfindung betrifft ein magnetisch gelagertes, lagestabilisierbares Schwungrad mit großer radialer Ausdehnung im Vergleich zur axialen Ausdehnung.

### Stand der Technik

Aus der DE 32 43 641 A1 ist ein magnetisch gelagertes lagestabilisierbares Schwungrad mit großer radialer Ausdehnung im Vergleich zur axialen Ausdehnung bekannt. Zum Drehantrieb des Schwungrades ist dort ein Krafterzeugungssystem vorgesehen, das nach dem elektrodynamischen Prinzip arbeitet. Zum Motorantrieb weist der Rotor einen Spalt an der Unterseite des Rades auf, in das die Motorwicklung, die auf einem Stator befestigt ist, eintaucht. Weitere Krafterzeugungssysteme zur axialen Verschiebung und zur radialen Verschiebung der Drehachse des Rades sowie zur Erzeugung von Kippmomenten sind ebenfalls vorgesehen. Die Krafterzeugungssysteme sind mit entsprechenden Sensoren über ein Regelsystem gekoppelt, so daß eine Lagestabilisierung in insgesamt fünf Freiheitsgraden möglich ist.

Die DE 38 19 205 A1 offenbart ein Schwungrad, das mittels eines Krafterzeugungssystems nach dem elektrodynamischen Prinzip am Außenumfang des Rotors radial antreibbar ist. Für die Erzeugung von Kippmomenten sind ebenfalls am Außenumfang des Schwungrades Krafterzeugungssysteme nach dem elektrodynamischen Prinzip vorgesehen. Dazu ist am Außenumfang des Rotors eine Ringnut vorgesehen, die zwei übereinander angeordnete entgegengesetzt magnetisierte Permanentmagnete aufnimmt. In diese Ringnut tauchen vier am Stator befestigte Spulen ein, die vom Magnetfluß des Permanentmagneten durchsetzt werden. Zur Erzeugung von Kippmomenten und Axialkräften sind die Ströme in diesen vier Spulen in ihrer Richtung umschaltbar.

Die gattungsbildende DE 31 50 122 A1 beschreibt ein elektromagnetisch gelagertes Schwungrad. Die Einrichtung enthält zwei radiale und ein axiales elektromagnetisches Lager. Sensoren, die die axiale und radiale Position des Rotors erfassen, sind in unmittelbarer Nähe der Lager angeordnet und liefern Signale an eine Regeleinrichtung, die entsprechende Stellsignale an die Magnetspulen der Lager liefern. Weiterhin ist ein außerhalb des elektromagnetischen Lagers angeordneter eisenloser, elektronisch kommutierter Motor vorgesehen.

Die DE 28 42 205 A1 beschreibt ein Schwungrad, das eine gemischte elektromagnetisch-permanentmagnetisch-elektrodynamische Lagerung aufweist. Hier weist die Lagereinrichtung nur in den radialen Richtungen eine aktiv geregelte Stabilisierung auf. Die axiale Richtung und die Raumachsen haben aufgrund der Ausbildung der magnetischen Lagereinrichtung eine hinreichend steife Stabilisierung.

Die EP 0 049 300 A1 beschreibt ein elektromagnetisch gelagertes Schwungrad, dessen Nabe als scheibenförmiger Hohlkörper ausgebildet ist.

### Vorteile der Erfindung

Mit den Maßnahmen gemäß den Merkmalen des Hauptanspruchs werden unerwünschte Schwingungen wirksam gedämpft. Unausgewogene Schwingungen und Unwuchten sowie deren Harmonische treten nicht auf. Auch können derart hervorgerufene Resonanzerscheinungen nicht zu Störungen beim Betrieb der Sensoren führen. Im Gegensatz zu elektromagnetischen Krafterzeugungssystemen, bei denen mechanische Schwankungen in Kräfte umgesetzt werden, erzeugen die bei der Erfindung eingesetzten Krafterzeugungssysteme nach dem elektrodynamischen Prinzip weniger unerwünschte Vibrationen. Die Verwendung elektrodynamischer Krafterzeugungssysteme führt zu einer vorteilhaften Masseverteilung zwischen Rotor und Stator.

Durch die Verlagerung des Antriebs in die Radnabe ist der Schwenkbereich des Schwungrades auch bei Verwendung relativ kleiner Motorspulen ausreichend groß.

### Zeichnungen

Anhand der Zeichnungen wird ein Ausführungsbeispiel der Erfindung näher beschrieben.
**Figur 1a** zeigt einen Querschnitt durch das Schwungrad mit Magnetlagerung nach der Erfindung,
**Figur 1b** ist eine Ansicht des Radnabenbereichs mit Sensoren für Translationsbewegungen und
**Figur 2** eine Ansicht eines Sensorsystems zur Erfassung von Translationsbewegungen.

### Beschreibung der Erfindung

Das in der Zeichnung dargestellte Schwungrad besteht aus einer Radnabe, die als im wesentlichen geschlossener scheibenartiger Hohlkörper H ausgebildet ist, Speichen (spokes) und einem äußeren Radkranz RK, der mit einer Ringnut (N) versehen ist und die Hauptmasse des Schwungrades bildet. Der ebenfalls scheibenartig ausgebildete Stator S ist an einer Zentralachse befestigt, die am Gehäuse (housing) montiert ist. Die Drehachse (spin axis) des Rotors R ist mit der Achse des Stators S identisch. Die Spulen (motor coils) w1 des Krafterzeugungssystems M1 für den Drehantrieb des Schwungrades befinden sich auf dem in der Radnabe angeordneten Stator S, und zwar vorteilhafterweise am Außenumfang der Statorscheibe S in einer Ebene senkrecht zur Scheibenausdehnung. Die dazugehörigen Permanentmagnete P1 (motor magnets) sind an der Innenseite des Hohlkörpers H an jeder Wand angebracht, die im wesentlichen parallel zur Radachse verläuft. Die Permanentmagnete weisen abwechselnde Pole (alternated poles) auf. Das Motorsystem besteht aus einem eisenlosen DC-Motor mit elektronischer Kommutierung. Bei niedrigen Geschwindigkeiten erhält die Antriebselektronik die Rotorposition von einem einfachen Wirbelstromsensorsystem zum Kommutieren. Bei höherer Geschwindigkeit (über 200 rpm) wird die Kommutierung von der Spannung - Gegen EMK - in den Motorwicklungen abgeleitet. Dies gewährleistet eine genaue Kommutierung auch beim Schwenken des Rotors.

Das Krafterzeugungssystem M2 für die radiale Verschiebung der Drehachse des Schwungrades ist ebenfalls im Innenraum der Radnabe angeordnet. Es arbeitet ebenfalls nach dem elektrodynamischen Prinzip. Auf dem scheibenförmigen Stator S sind zwei nebeneinander liegende ringförmige Wicklungen w21 und w22 (radial actuator coils) angeordnet. Die dazugehörigen ringförmig ausgebildeten Permanentmagnete P2, P3 befinden sich an den Scheibeninnenseiten des Hohlkörpers H jeweils im Bereich unter bzw. über den im Stator S befindlichen Wicklungen w21, w22. Der toroidförmige magnetische Fluß ist schematisch dargestellt. Es entsteht eine Kraftwirkung in x-Richtung.

Das axiale Krafterzeugungssystem M3 für die axiale Verschiebung arbeitet ebenfalls nach dem elektrodynamischen Prinzip. Es befindet sich am äußeren Radumfang des Rotors R in einer in axialer Richtung (y-Richtung) verlaufenden Ringnut N im äußeren Radkranz (rotor rim). An der nach außen weisenden Wand der Ringnut N befinden sich zwei in y-Richtung übereinander angeordnete schleifenförmige Permanentmagnete (upper and lower magnet rim) mit gleichgerichteten Polen (unipolar poles). Die Permanentmagnete liefern ein gleichmäßiges kreisförmiges Magnetfeld für die axialen und Kippmonent-Krafterzeugungssysteme. Die Spulen w31 und w32 für das Krafterzeugungssystem M3 sind als übereinander liegende Ringwicklungen auf einem weiteren Stator S1 angeordnet, der über ein Gehäuse (housing) starr mit dem Stator S verbunden ist. Es entsteht der schematisch dargestellte toroidförmige magnetische Fluß, der eine Kraftwirkung in y-Richtung erzeugt.

Zur Erzeugung von Kippmomenten ist ein Krafterzeugungssystem M4 vorgesehen (nicht dargestellt) mit vier in der Nut N befindlichen in Epoxidharz eingebetteten Wicklungen, die sich jeweils in einem Kreissektor von 90° erstrecken. Nähere Einzelheiten zur geometrischen Anordnung dieser Wicklungen enthält die DE 32 40 809 C2, insbesondere Figur 6b. Kippmomente werden erzeugt durch Erregung jeweils gegenüberliegender Wicklungen mit gegenphasigen Strömen.

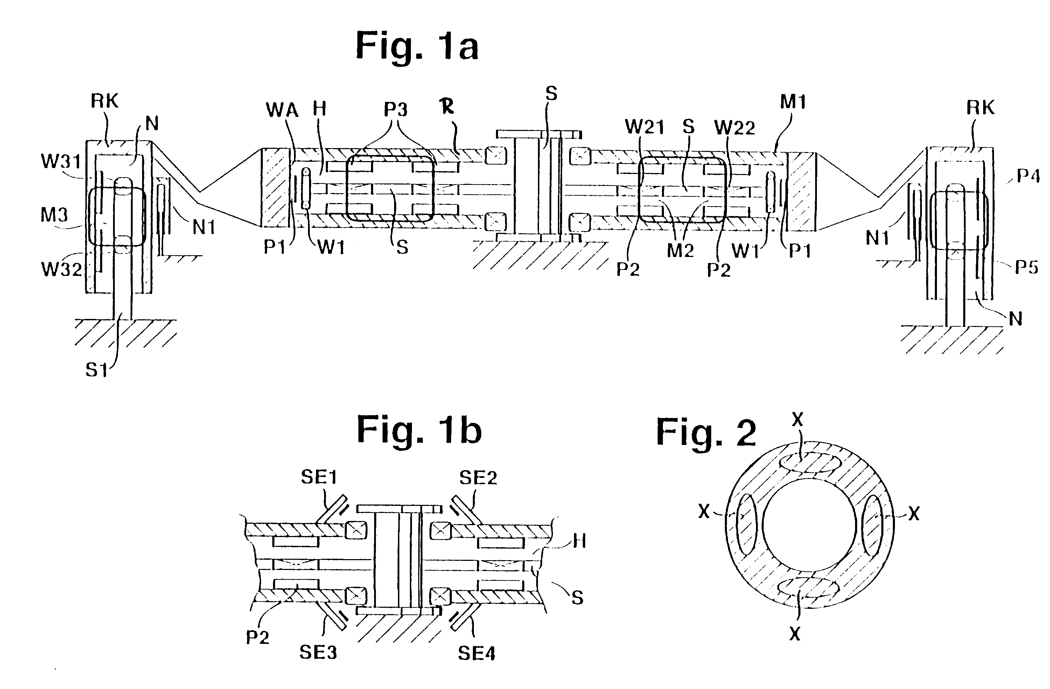

Sensoren SE1 ... SE4 - nur in Figur 1b dargestellt - zur Erfassung der Bewegungen des Schwungrades in den erwähnten Freiheitsgraden sind über ein Regelsystem RS (nicht dargestellt) zur Lagestabilisierung mit den entsprechenden Krafterzeugungssystemen M1 bis M4 gekoppelt. Einzelheiten solcher Regelsysteme zur Lagestabilisierung sind beispielsweise der DE 32 40 809 C2 oder der DE 38 19 205 A1 entnehmbar.

Insgesamt sind drei Sensorsysteme vorgesehen: das Kippsensorsystem besteht aus zwei Kippsensoren (tilt sensor coils) mit jeweils zwei Spulensystemen. Die Sensorspulen sind am Gehäuse befestigt, und zwar zueinander gegenüberliegend in der Nut N am äußeren Umfang des Rotorkranzes. Die Differenz zwischen den entsprechenden Sensorspulen liefert die Kipposition. Die Anbringung der Kippsensoren in der Nähe des Krafterzeugungssystems M4 für das Kippmoment führt zu einer durch Störeinflüsse wenig beeinflußten Regelung.

Das Translationssensorsystem besteht aus vier Sensorspulen über der Radnabe und vier Sensorspulen unterhalb der Radnabe - SE1 ... SE4 (Figuren 1b und 2). Die Referenzflächen der Sensoren SE1 ... SE4 bestehen aus Zahnkränzen an der Ober- und/oder Unterseite des Randnabenrotorgehäuses H. Die Sensorspulen (x sensor coils) nach Figur 2 sind starr am Stator S befestigt, damit die radiale Abstandsdifferenz zwischen Stator S und Rotor R ermittelt werden kann. Die Anordnung dieser Sensoren gerade im Radnabenbereich führt zu genaueren Erfassungen der Bewegungen (aktive Störschwingungsunterdrückung) als bei Systemen mit Sensoren am Rotoraußenrand. Die translatorischen Bewegungen sind im Radnabenbereich weniger durch Kippbewegungen gestört.

Durch Auswertung der Spulenausgangssignale können alle translatorischen Freiheitsgrade erfaßt werden.

Die axiale Positionsbestimmung erfolgt durch Vergleich der Spannungen in den x- und y-Spulen, die oberhalb und unterhalb des Rotors angebracht sind.

Für die Kommutierung bei geringer Geschwindigkeit sind außerdem statische Sensoren (nicht dargestellt) vorgesehen. Für alle Sensoren wird vorteilhafterweise das Wirbelstrom-Prinzip angewandt, da es einfach aufgebaut werden kann und zuverlässig arbeitet. Es weist eine hohe Bandbreite auf und ist ausreichend linear, wenn die elektrischen und mechanischen Eigenschaften geeignet gewählt sind. Alle Sensoren arbeiten nach dem Differenzprinzip, um Drifteffekte zu vermeiden.

Der Radkranz des Rotors weist eine weitere innenseitig gelegene Ringnut N1 auf, die aus Aluminium besteht und Teil des Kippsensorsystems ist. Die dazugehörigen Spulen (tilt sensor coils) sind an Stator S1 montiert und ragen in die Ringnut N1.

Zwischen der Achse des Stators S und der Radnabe des Rotors R sind jeweils zwei Kugellagerringe vorgesehen, die bei Ausfall der Magnetlager, das heißt der Stromversorgung, arbeiten (emergency bearings).

Das vorgestellte Schwungrad besitzt einen Schwenkbereich von +/-4°. Daher ist es ideal geeignet als gyroskopische Stelleinrichtung für Kommunikationssatelliten. Das heißt, der Rotor kann gegenüber dem Gehäuse in Kippachsen geschwenkt werden, die nicht mit der Drehachse identisch sind (vernier gimballing). Das Kippen des Rotors kann außerdem zum Speichern eines transversalen Moments ausgenutzt werden, um externe Störmomente zu kompensieren oder zur Veränderung der Bewegung von rotierenden Gebilden an Bord des Satelliten, wie zum Beispiel zur Antennenausrichtung.

Im Falle eines Ausfalls der Satelliten-Busspannung läßt sich der Motor automatisch in den Generatorbetrieb umschalten, um die Energie für die Eigenversorgung sowie eine stabile Lagerung bis hinunter zu 1500 rpm aufzubringen. Darunter wird die elektromotorische Kraft EMK zu gering, um genügend Energie für die Versorgung der Elektronik zu liefern.

## Patentansprüche

1. Magnetisch gelagertes lagestabilisierbares Schwungrad mit großer radialer Ausdehnung im Vergleich zur axialen Ausdehnung mit folgenden Merkmalen:
- wenigstens ein Krafterzeugungssystem (M1) für den Drehantrieb des Schwungrades ist vom elektrodynamischen Prinzip,
- eine eisenlose Spule (w1) des Krafterzeugungssystems (M1) für den Drehantrieb befindet sich auf einem in einer Radnabe des Schwungrades angeordneten Stator (S),
- ein zugehöriger Permanentmagnet (P1) des Krafterzeugungssystems (M1) für den Drehantrieb befindet sich auf dem Rotor (R) im Bereich der Spule (w1),
gekennzeichnet durch folgende Merkmale:
- ein Krafterzeugungssystem (M2) für eine radiale Verschiebung des Schwungrades ist vom elektrodynamischen Prinzip,
- ein Krafterzeugungssystem (M3) für eine axiale Verschiebung des Schwungrades ist vom elektrodynamischen Prinzip und befindet sich am äußeren Radumfang des Rotors (R), und
- ein Krafterzeugungssystem (M4) vom elektrodynamischen Prinzip für die Erzeugung von Kippbewegungen ist im äußeren Randbereich des Rotors (R) vorgesehen.

2. Schwungrad nach Anspruch 1, **dadurch gekennzeichnet**, daß die Radnabe aus einem scheibenartigen, im wesentlichen geschlossenen Hohlkörper (H) besteht.

3. Schwungrad nach Anspruch 2, **dadurch gekennzeichnet**, daß der ebenfalls scheibenartig ausgebildete Stator (S) an seinem Außenumfang die Spule (w1) des Krafterzeugungssystems für den Drehantrieb trägt.

4. Schwungrad nach Anspruch 2 oder 3, **dadurch gekennzeichnet**, daß die Permanentmagnete (P1) des Krafterzeugungssystems (M1) für den Drehantrieb an der Innenseite des Hohlkörpers (H) an jener Wand (WA) angebracht sind, die im wesentlichen parallel zur Radachse verläuft.

5. Schwungrad nach einem der Ansprüche 1 bis 4, **dadurch gekennzeichnet**, daß das Krafterzeugungssystem (M2) für die radiale Verschiebung der Drehachse des Schwungrades ebenfalls in der Radnabe angeordnet ist.

6. Schwungrad nach einem der Ansprüche 1 bis 5, **dadurch gekennzeichnet**, daß das Krafterzeugungssystem (M2) für die radiale Verschiebung im Innenraum des Hohlkörpers (H) angeordnet ist.

7. Schwungrad nach Anspruch 6, **dadurch gekennzeichnet**, daß die Spulen (w2) des Krafterzeugungssystems (M2) für die radiale Verschiebung als nebeneinander liegende scheibenartige Wicklungen (w21, w22) im Stator (S) ausgebildet sind.

8. Schwungrad nach einem der Ansprüche 5 bis 7, **dadurch gekennzeichnet**, daß die Permanentmagnete (P2, P3) für das Krafterzeugungssystem (M2) für die radiale Verschiebung an den Scheibeninnenseiten des Hohlkörpers (H) jeweils im Bereich über bzw. unter den im Stator (S) befindlichen Wicklungen (w21, w22) angeordnet sind.

9. Schwungrad nach einem der Ansprüche 1 bis 8, **dadurch gekennzeichnet**, daß am äußeren Radumfang des Rotors (R) eine in axialer Richtung verlaufende Ringnut (N) vorgesehen ist, daß in dieser Ringnut (N) zwei übereinander angeordnete Permanentmagnete (P4, P5) an mindestens einer der Nutwände vorgesehen sind und daß zu diesen Permanentmagneten (P4, P5) gehörige Spulen (w31, w32) als Ringwicklungen auf einem weiteren Stator (S1) im Bereich der Permanentmagnete (P4, P5) übereinander angeordnet sind.

10. Schwungrad nach einem der Ansprüche 1 bis 9, **dadurch gekennzeichnet**, daß das Krafterzeugungssystem (M4) für die Erzeugung von Kippbewegungen paarweise gegenüberliegende sektorförmige Spulen auf einem weiteren Stator (S1) aufweist, wobei die jeweils gegenüberliegenden Spulen mit zueinander gegensinnigen Strömen beaufschlagbar sind.

11. Schwungrad nach einem der Ansprüche 1 bis 10, **gekennzeichnet durch** Sensoren (SE1, ..., SE4), die über ein Regelsystem (RS) zur Lagestabilisierung mit den entsprechenden Krafterzeugungssystemen (M1, ..., M4) gekoppelt sind.

12. Schwungrad nach einem der Ansprüche 1 bis 11, **dadurch gekennzeichnet**, daß die Sensoren (SE1, ..., SE4) für die transversale Verschiebung, d. h. axiale und radiale Verschiebung der Drehachse des Schwungrades, im Radnabenbereich angeordnet sind.

13. Schwungrad nach Anspruch 12, **dadurch gekennzeichnet**, daß die Referenzflächen der Sensoren (SE1, ..., SE4) für die transversale Verschiebung aus Zahnkränzen an der Ober- und/oder Unterseite des Radnabengehäuses (H) bestehen.

## Claims

1. A magnetically mounted position-stabilised flywheel having a greater radial dimension in comparison to its axial dimension and having the following features:
- at least one power generating system (M1) for the rotational drive of the flywheel is operated on an electrodynamic principle,
- a non-ferruginous coil (w1) of the power generating system (M1) for the rotational drive is located on a stator (S) which is arranged in a wheel hub of the flywheel,
- an associated permanent magnet (P1) of the power generating system (M1) for the rotational drive is located on the rotor (R) in the region of the coil (w1), characterised by the following features:
- a power generating system (M2) for a radial movement of the flywheel is operated on an electrodynamic principle,
- a power generating system (M3) for an axial movement of the flywheel is operated on an electrodynamic principle and is located on the outer circumference of the rotor (R), and
- a power generating system (M4) operated on an electrodynamic principle for the production of tilt movement is provided in the outer peripheral region of the rotor (R).

2. A flywheel according to claim 1, characterised in that the wheel hub consists of a disc-shaped and essentially enclosed hollow body (H).

3. A flywheel according to claim 2, characterised in that the likewise disc-shaped stator (S) carries, on its outer circumference, the coil (w1) of the power generating system for the rotational drive.

4. A flywheel according to claim 2 or 3, characterised in that the permanent magnets (P1) of the power generating system (M1) for the rotational drive are attached on the inner side of the hollow body (H), on the particular wall (WA) which extends essentially parallel to the wheel axis.

5. A flywheel according to one of the claims 1 to 4, characterised in that the power generating system (M2) for the radial movement of the rotational axis of the flywheel is likewise arranged in the wheel hub.

6. A flywheel according to one of the claims 1 to 5, characterised in that the power generating system (M2) for the radial movement is arranged in the interior of the hollow body (H).

7. A flywheel according to claim 6, characterised in that the coils (w2) of the power generating system (M2) for the radial movement are constructed as disc-shaped windings (w21, w22) lying adjacently to each other in the stator (S).

8. A flywheel according to one of the claims 5 to 7, characterised in that the permanent magnets (P2, P3) for the power generating system (M2) for the radial movement are arranged on the internal sides of the discs of the hollow body (H), in each case in a region either above or, as the case may be, below the windings (w21, w22) located in the stator (S).

9. A flywheel according to one of the claims 1 to 8, characterised in that an annular groove (N) extending in an axial direction is provided on the outer circumference of the rotor (R), that, within said annular groove (N), two permanent magnets (P4, P5) arranged above each other are provided on at least one of the groove walls and that the coils (w31, w32) associated to said permanent magnets (P4, P5) are arranged as annular windings one above the other on a further stator (S1) in the region of the permanent magnets (P4, P5).

10. A flywheel according to one of the claims 1 to 9, characterised in that the power generating system (M4) for the production of tilt movements comprises, on a further stator (S1), sector-shaped coils lying opposite to each other in pairs, whereby the coils lying respectively opposite to each other can be impinged with currents flowing in opposite directions to each other.

11. A flywheel according to one of the claims 1 to 10, characterised by sensors (SE1, ..., SE4), which are coupled to the corresponding power generating systems (M1, ..., M4) by means of a position-stabilising control system (RS).

12. A flywheel according to one of the claims 1 to 11, characterised in that the sensors (SE1, ..., SE4) for the transversal movement, i.e. the axial and radial movement of the rotational axis of the flywheel, are arranged in the region of the wheel hub.

13. A flywheel according to claim 12, characterised in that the reference surfaces of the sensors (SE1, ..., SE4) for the transversal movement consist of toothed wheel rims on the upper and/or lower side of the wheel hub housing (H).

## Revendications

1. Volant d'inertie à sustentation magnétique à stabilisation d'assiette, avec une grande extension radiale par rapport à son extension axiale, possédant les caractéristiques suivantes :
- au moins un système de production de force (M1) pour l'entraînement en rotation du volant d'inertie procède du principe électrodynamique,
- une bobine à noyau d'air (w1) du système de production de force (M1) pour l'entraînement en rotation se trouve sur un stator (S) disposé dans un moyeu du volant d'inertie,
- un aimant permanent associé (P1) du système de production de force (M1) pour l'entraînement en rotation se trouve sur le rotor (R) dans la zone de la bobine (w1),
caractérisé en ce que :
- un système de production de force (M2) pour un déplacement radial du volant d'inertie procède du principe électrodynamique,
- un système de production de force (M3) pour un déplacement axial du volant d'inertie procède du principe électrodynamique et se trouve sur la périphérie extérieure du rotor (R), et
- un système de production de force (M4) procédant du principe électrodynamique pour générer des mouvements basculants est prévu dans la zone de bord extérieur du rotor (R).

2. Volant d'inertie selon la revendication 1, caractérisé en ce que le moyeu de volant est constitué par un corps creux en forme de disque sensiblement fermé (H).

3. Volant d'inertie selon la revendication 2, caractérisé en ce que le stator (S) également configuré en disque porte, sur sa périphérie extérieure, la bobine (w1) du système de production de force.

4. Volant d'inertie selon la revendication 2 ou 3, caractérisé en ce que les aimants permanents (P1) du système de production de force (M1) pour l'entraînement en rotation sont disposés sur le côté intérieur du corps creux (H), contre la paroi (WA) qui est orientée sensiblement parallèlement à l'axe du volant.

5. Volant d'inertie selon l'une des revendications 1 à 4, caractérisé en ce que le système de production de force (M2) pour le déplacement radial de l'axe de rotation du volant d'inertie est également disposé dans le moyeu de volant.

6. Volant d'inertie selon l'une des revendications 1 à 5, caractérisé en ce que le système de production de force (M2) pour le déplacement radial est disposé dans l'espace intérieur du corps creux (H).

7. Volant d'inertie selon la revendication 6, caractérisé en ce que les bobines (w2) du système de production de force (M2) pour le déplacement radial sont configurées en enroulements en forme de disques (w21, w22) juxtaposés dans le stator (S).

8. Volant d'inertie selon l'une des revendications 5 à 7, caractérisé en ce que les aimants permanents (P2, P3) pour le système de production de force (M2) pour le déplacement radial sont disposés sur les côtés intérieurs en forme de disques du corps creux (H), dans les zones situées respectivement au-dessus et au-dessous des enroulements (w21, w22) disposés dans le stator (S).

9. Volant d'inertie selon l'une des revendications 1 à 8, caractérisé en ce qu'une gorge annulaire (N) s'étendant en direction axiale est prévue sur la périphérie extérieure du rotor (R), en ce que deux aimants permanents superposés (P4, P5) sont implantés dans cette gorge annulaire (N) contre au moins une des parois de gorge, et en ce que les bobines (w31, w32) associées auxdits aimants permanents (P4, P5) sont superposées sous forme d'enroulements annulaires sur un autre stator (S1) dans la zone des aimants permanents (P4, P5).

10. Volant d'inertie selon l'une des revendications 1 à 9, caractérisé en ce que le système de production de force (M4) pour générer des mouvements basculants comporte des bobines en forme de secteurs opposées par paires sur un autre stator (S1), les bobines opposées pouvant être alimentées par des courants de sens contraire.

11. Volant d'inertie selon l'une des revendications 1 à 10, caractérisé par des capteurs (SE1,...,SE4) qui, pour stabiliser l'assiette, sont accouplés à des systèmes correspondants de production de force (M1,...,M4) par l'intermédiaire d'un système de régulation (RS).

12. Volant d'inertie selon l'une des revendications 1 à 11, caractérisé en ce que les capteurs (SE1,...,SE4) pour le déplacement transversal, c'est-à-dire le déplacement axial et radial de l'axe de rotation du volant d'inertie, sont implantés dans la zone du moyeu de volant.

13. Volant d'inertie selon la revendication 12, caractérisé en ce que les surfaces de référence des capteurs (SE1,...,SE4) pour le déplacement transversal sont constituées par des couronnes dentées disposées sur le dessus et/ou le dessous du boîtier de moyeu de volant (H).
